# DEMANDE DE BREVET EUROPEEN

(11) **EP 3 367 472 A1**
(43) Date de publication de la demande: **29.08.2018**
(21) Numéro de dépôt: 18158744.5
(22) Date de dépôt: 27.02.2018
(51) Int. Cl.: H01M 2/26, H01M 4/131, H01M 4/134, H01M 10/04, H01M 10/054, H01M 10/0568, H01M 10/0569, H01M 4/02

(54) **ACCUMULATEUR ÉLECTROCHIMIQUE À ARCHITECTURE BIPOLAIRE, À FORTE TENSION PAR CELLULE ÉLECTROCHIMIQUE**

(30) Priorité: 28.02.2017 FR 1751647
(71) Demandeur: Commissariat à l'énergie atomique et aux énergies alternatives, 75015 Paris (FR)
(72) Inventeur: REYNIER, Yvan, 38120 SAINT-EGREVE (FR); CHAMI, Marianne, 38600 FONTAINE (FR); MARTINET, Sébastien, 38210 SAINT-QUENTIN-SUR-ISERE (FR)
(74) Mandataire: Brevalex

(57) **Abrégé**

L'invention se rapporte à un accumulateur électrochimique à architecture bipolaire dont chaque cellule électrochimique a une forte tension nominale, typiquement supérieure à 3,6 V, et qui présente, grâce à cette tension nominale, une forte densité de puissance.

Cet accumulateur électrochimique comprend un premier et un deuxième collecteur de courant entre lesquels est disposé un empilement d'au moins une première et une deuxième cellule électrochimique dans lequel :
- chacune des première et deuxième cellules électrochimiques comprend une électrode positive, une électrode négative et un électrolyte conducteur d'ions ;
- les première et deuxième cellules électrochimiques sont séparées l'une de l'autre par un troisième collecteur de courant qui supporte sur une première face une électrode de la première cellule électrochimique et sur une deuxième face opposée à la première face une électrode de signe opposé de la deuxième cellule électrochimique ;
- le troisième collecteur de courant est en aluminium ou en un alliage d'aluminium ;
et est caractérisé en ce que l'électrolyte comprend des ions choisis parmi les ions sodium, potassium, calcium et magnésium.

Applications : toute application dans laquelle des accumulateurs à forte densité de puissance sont susceptibles d'être utilisés et, notamment, dans la production de véhicules électriques ou hybrides.

## Description

### DOMAINE TECHNIQUE

L'invention se rapporte au domaine des accumulateurs électrochimiques qui fonctionnent selon le principe d'insertion-désinsertion, ou autrement dit d'intercalation-désintercalation, d'ions dans au moins une électrode.

Plus spécifiquement, l'invention se rapporte à un accumulateur électrochimique à architecture bipolaire dont chaque cellule électrochimique a une forte tension nominale, typiquement supérieure à 3,6 V, et qui présente, grâce à cette tension nominale, une forte densité de puissance.

L'invention trouve application dans tous les domaines où des accumulateurs à forte densité de puissance sont susceptibles d'être utilisés et, notamment, dans la production de véhicules électriques ou hybrides et, en particulier, de véhicules microhybrides à système « Stop and Start » (coupure automatique du moteur à l'arrêt temporaire) en remplacement des accumulateurs acide-plomb actuellement utilisés dans ce type de véhicules.

### ÉTAT DE LA TECHNIQUE

Afin de répondre aux besoins croissants dans le domaine de l'alimentation autonome (informatique, vidéo, téléphonie, spatial, médical, microélectronique, applications stationnaires, véhicules électriques ou hybrides), plusieurs systèmes de stockage de l'énergie sont aujourd'hui employés, dont les accumulateurs lithium-ion (ou Li-ion), nickel-hydrure métallique (ou Ni-MH), nickel-cadmium (ou Ni-Cd) et acide-plomb.

Ces systèmes présentent des performances différentes en termes de densité d'énergie et de densité de puissance.

Depuis quelques années, les ventes d'accumulateurs Li-ion dépassent largement celles des Ni-MH et Ni-Cd. Ce marché est à ce jour principalement drainé par les applications téléphonies et ordinateurs portables pour lesquelles l'autonomie est un critère primordial. Cette évolution s'explique par l'amélioration continue des performances des accumulateurs Li-ion en termes de densité d'énergie, conduisant ainsi à des densités d'énergie nettement supérieures à celles proposées pour les accumulateurs Ni-Cd et Ni-MH (plus de 200 Wh/kg pour un accumulateur Li-ion *versus* 50, 100 et 35 Wh/kg pour les accumulateurs Ni-Cd, Ni-MH et acide-plomb respectivement).

À l'heure actuelle, le marché des accumulateurs Li-ion est dominé par la technologie initialement introduite en 1991 par la société SONY Energitech, qui est basée sur une architecture dite « monopolaire », c'est-à-dire une architecture dans laquelle un accumulateur ne comprend qu'une seule cellule électrochimique qui utilise une électrode positive à base d'oxyde de cobalt lithié (LiCoO₂) et une électrode négative à base de graphite, séparée l'une de l'autre par un électrolyte conducteur d'ions lithium. La tension nominale de ces accumulateurs est de l'ordre de 3,6 V alors qu'elle n'est que de 1,5 V pour la plupart des autres types d'accumulateurs (Ni-Cd, Ni-MH, etc).

Toutefois, sur le plan technique, cette technologie a atteint un palier de performances parce que les perspectives d'améliorer, d'une part, les performances des matériaux d'insertion/désinsertion des ions lithium et, d'autre part, les procédés de fabrication des accumulateurs Li-ion à architecture monopolaire sont de plus en plus limitées.

Une nouvelle génération d'accumulateurs Li-ion, basée sur une architecture « bipolaire », est à l'étude depuis plusieurs années.

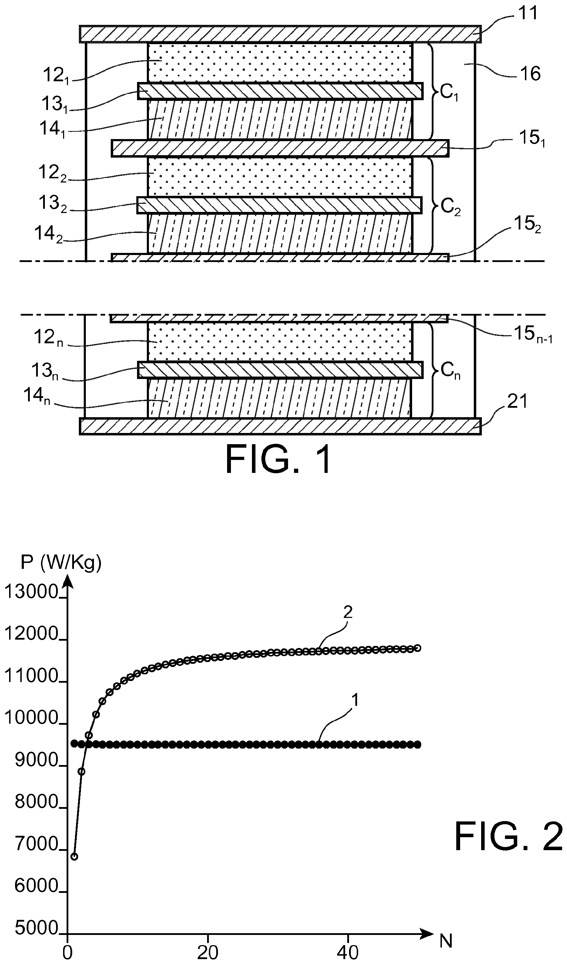

Un exemple typique de réalisation d'un accumulateur Li-ion bipolaire est illustré schématiquement, vu en coupe longitudinale, sur la figure 1 annexée.

Comme visible sur cette figure, ce type d'accumulateur, référencé 10, comprend entre deux collecteurs de courant terminaux, respectivement 11 et 21, un empilement de n cellules électrochimiques, respectivement C₁, C₂, ..., Cₙ, qui comprennent chacune une électrode positive, respectivement 12₁, 12₂, ..., 12ₙ, une électrode négative, respectivement 14₁, 14₂, ..., 14ₙ, et un électrolyte conducteur d'ions lithium, respectivement 13₁, 13₂, ..., 13ₙ, qui est intercalé entre l'électrode positive et l'électrode négative, empilement dans lequel les cellules électrochimiques sont séparées les unes des autres par un collecteur de courant, respectivement 15₁, 15₂, ..., 15ₙ₋₁, qui se présente sous la forme d'une plaque dont une face est au contact de l'électrode négative d'une cellule électrochimique tandis que l'autre face est au contact de l'électrode positive de la cellule électrochimique adjacente.

Un joint 16, qui est réalisé par dépôt d'une résine du type résine époxyde, ou d'une colle du type colle acrylique ou polyuréthanne, sur la périphérie des cellules électrochimiques et des collecteurs de courant qui séparent ces cellules assure l'étanchéité de l'accumulateur.

L'architecture bipolaire correspond ainsi à une mise en série de plusieurs accumulateurs monopolaires mais par l'intermédiaire de collecteurs de courant - qui sont dits « bipolaires » -, ce qui permet de s'affranchir des connectiques externes qui sont nécessaires pour assembler en série des accumulateurs monopolaires. Elle conduit donc à des systèmes qui sont plus légers que ceux résultant d'un assemblage en série d'accumulateurs Li-ion monopolaires et qui présentent une résistance électrique plus faible et une densité de puissance plus intéressante.

L'un des verrous pour le développement des accumulateurs Li-ion bipolaires est le choix des collecteurs de courant bipolaires.

En effet, hormis les accumulateurs Li-ion qui utilisent le titanate de lithium, de formule Li₄Ti₅O₁₂ (ou LTO) comme matériau d'électrode négative, tous les autres accumulateurs Li-ion commerciaux utilisent des collecteurs de courant en cuivre pour les électrodes négatives et des collecteurs de courant en aluminium pour les électrodes positives car le lithium peut s'insérer dans l'aluminium à bas potentiel (en dessous de 0,3 V par rapport au couple Li⁺/Li) et le cuivre s'oxyde au-dessus de 3 V par rapport au couple Li⁺/Li.

L'obligation d'avoir, dans une architecture bipolaire, un matériau de collecteur de courant différent pour chaque type d'électrode si on veut obtenir un accumulateur de tension nominale supérieure à 3 V par cellule électrochimique oblige à utiliser des solutions complexes à mettre en oeuvre comme la fabrication de collecteurs en cuivre/aluminium par colaminage ou par dépôt de cuivre sur un feuillard d'aluminium. Ces solutions sont coûteuses et risquées car le moindre défaut de fabrication (couche non étanche) va rapidement générer une fuite d'électrolyte entre les compartiments par corrosion du cuivre si le défaut est présent sur la couche d'aluminium ou alliage avec l'aluminium si le défaut est présent sur la couche de cuivre.

Pour pallier ce problème, certains auteurs ont proposé une architecture bipolaire dérivée, dans laquelle les collecteurs de courant bipolaires sont constitués d'une double couche de collecteurs, l'un résistant aux tensions négatives, l'autre aux tensions positives (cf. par exemple, le brevet US 6,664,006). Cette solution permet de s'affranchir des problèmes de corrosion/réactivité des collecteurs de courant bipolaires puisque chaque face de ces collecteurs n'est en contact qu'avec une seule polarité mais elle n'est pas satisfaisante en termes de densité d'énergie puisque le poids des collecteurs de courant bipolaires est doublé. L'utilisation d'une architecture bipolaire perd alors une partie de son sens.

Par conséquent, la plupart des architectures Li-ion bipolaires développées à ce jour sont à base de matériaux d'électrodes négatives à haut potentiel de fonctionnement (> 1 V par rapport au couple Li⁺/Li) et utilisent des collecteurs de courant bipolaires en aluminium. Par exemple, le brevet FR 2 832 859 propose de coupler des électrodes positives à base de phosphate de fer lithié LiFeₓMn₁₋ₓPO₄ à des électrodes négatives à base de LTO, matériaux présentant tous deux des potentiels de fonctionnement acceptables pour des collecteurs de courant bipolaires en aluminium. Mais en associant ces deux matériaux, la tension nominale des cellules électrochimiques est diminuée et atteint tout juste 2 V. En utilisant des matériaux d'électrode positive à plus haut potentiel, la tension nominale peut atteindre 2,5 V mais la densité d'énergie est alors réduite de moitié par rapport à celle que présente un assemblage d'accumulateurs Li-ion monopolaires tel qu'un assemblage d'accumulateurs LiCoO₂/graphite.

Or, une tension élevée est très souhaitable pour un accumulateur de puissance puisque la puissance maximum, notée Pₘₐₓ et exprimée en W, peut se calculer par la formule Pₘₐₓ=U²/4R dans laquelle U représente la tension en circuit ouvert (ou OCV pour « Open Circuit Voltage ») d'une cellule électrochimique, exprimée en V, tandis que R représente la résistance interne de cette cellule, exprimée en mOhm.

Les Inventeurs se sont donc fixé pour but de fournir des accumulateurs à architecture bipolaire dont chaque cellule électrochimique ait une tension nominale au moins égale, voire supérieure, à 3,6 V - ce qui correspond à la tension nominale des accumulateurs Li-ion monopolaires actuels - tout en dotant ces accumulateurs de collecteurs de courant bipolaires monomatériau afin, d'une part, d'éviter de recourir à des processus complexes et coûteux pour la fabrication de ces accumulateurs et, d'autre part, de ne pas perdre les avantages inhérents à ce type d'architecture.

Or, dans le cadre de leurs travaux, les Inventeurs ont constaté que, l'utilisation, dans une architecture bipolaire, d'un électrolyte conducteur d'ions sodium, potassium, calcium ou magnésium, conjointement avec des collecteurs de courant bipolaires en aluminium, permet de manière inattendue d'obtenir un accumulateur bipolaire dont les cellules électrochimiques présentent une tension nominale supérieure à 3,6 V.

Et c'est sur cette constatation qu'est basée l'invention.

### EXPOSÉ DE L'INVENTION

L'invention a donc pour objet un accumulateur électrochimique à architecture bipolaire, qui comprend un premier et un deuxième collecteur de courant - dits « collecteurs de courant terminaux » - entre lesquels est disposé un empilement d'au moins une première et une deuxième cellule électrochimique dans lequel :
- chacune des première et deuxième cellules électrochimiques comprend une électrode positive, une électrode négative et un électrolyte conducteur d'ions ;
- les première et deuxième cellules électrochimiques sont séparées l'une de l'autre par un troisième collecteur de courant - dit « collecteur de courant bipolaire » - qui supporte sur une première face une électrode de la première cellule électrochimique et sur une deuxième face opposée à la première face une électrode de signe opposé de la deuxième cellule électrochimique ;
- le troisième collecteur de courant est en aluminium ou en un alliage d'aluminium ;
et qui est caractérisé en ce que l'électrolyte conducteur d'ions comprend des ions choisis parmi les ions sodium, potassium, calcium et magnésium.

On rappelle que, dans le domaine des accumulateurs électrochimiques, on entend :
- par « électrode positive », l'électrode qui fait office de cathode quand l'accumulateur délivre du courant, c'est-à-dire lorsqu'il est en processus de décharge, et fait office d'anode lorsque l'accumulateur est en processus de charge ; et
- par électrode négative, l'électrode qui, à l'inverse, fait office d'anode quand l'accumulateur délivre du courant et fait office de cathode lorsque l'accumulateur est en processus de charge ;
- par « densité d'énergie » ou « énergie spécifique » d'un accumulateur, la quantité d'énergie, exprimée en wattheure (Wh), stockée par unité de masse, exprimée en kilogramme (kg), de cet accumulateur;
- par « densité de puissance » ou « puissance spécifique » d'un accumulateur, la puissance (c'est-à-dire l'énergie électrique fournie par unité de temps), exprimée en watt (W), que peut délivrer une unité de masse, exprimée en kilogramme (kg), de cet accumulateur ;
- par « tension nominale » ou « tension moyenne » d'un accumulateur monopolaire ou d'une cellule électrochimique d'un accumulateur bipolaire, la tension moyenne, exprimée en volt (V), que présente en moyenne cet accumulateur ou cette cellule électrochimique pendant sa décharge.

Par ailleurs, dans ce qui précède et ce qui suit, on considère qu'une cellule électrochimique est adjacente à une autre cellule électrochimique lorsqu'elle précède ou suit immédiatement celle-ci dans l'empilement de cellules électrochimiques que comprend l'accumulateur et n'est donc séparée d'elle que par un collecteur de courant bipolaire.

Conformément à l'invention, l'électrolyte conducteur d'ions se présente, de préférence, sous forme liquide, auquel cas :
- d'une part, il comprend un sel de sodium, de potassium, de calcium ou de magnésium en solution dans un solvant organique ou un mélange de solvants organiques ; et
- d'autre part, il imprègne un séparateur qui est disposé entre l'électrode positive et l'électrode négative de chaque cellule électrochimique et qui est typiquement constitué d'un matériau poreux et isolant électrique.

Ce séparateur peut être en tout matériau qui est apte à accueillir dans sa porosité un électrolyte liquide et qui est chimiquement inerte vis-à-vis des matériaux actifs des électrodes. Ainsi, le séparateur peut notamment être en un polymère poreux tel qu'une polyoléfine (polyéthylène, polypropylène ou un mélange des deux), un poly(oxyde d'éthylène) (ou PEO), un polyacrylonitrile (ou PAN), un poly(fluorure de vinylidène) (ou PVdF) ou poly(fluorure de vinylidène-*co*-hexafluoropropylène) (ou PVdF-HFP) ou un mélange de ceux-ci.

En variante, l'électrolyte peut également être sous forme gélifiée, notamment par gélification au moyen d'un polymère du type PEO, PAN, PVdF ou PVdF-HFP, ou encore sous forme solide, la préparation d'électrolytes sous ces formes ayant été largement décrite dans la littérature.

Conformément à l'invention, il n'est pas essentiel que les collecteurs de courant terminaux soient, comme le collecteur de courant bipolaire, en aluminium ou en un alliage d'aluminium. Ainsi, par exemple, le collecteur de courant terminal qui est situé au contact de l'électrode négative de l'une des cellules électrochimiques peut être en cuivre, l'autre collecteur de courant terminal étant alors en aluminium ou en un alliage d'aluminium.

Toutefois, pour des raisons de coût et de poids, on préfère que tous les collecteurs de courant que comprend l'accumulateur électrochimique soient en aluminium ou en un alliage d'aluminium (tel qu'un alliage appartenant aux séries 1000 et 3 000, par exemple un alliage Al 1085, Al 1050 ou Al 1N30) et, plus encore, en aluminium. Auquel cas, chacun de ces collecteurs de courant se présente avantageusement sous la forme d'un feuillard d'aluminium mesurant typiquement de 6 µm à 50 µm d'épaisseur.

Dans le cadre de l'invention, on préfère que l'accumulateur électrochimique soit un accumulateur dans lequel l'électrolyte conducteur d'ions comprend des ions sodium (E°(Na⁺/Na)= -2,71 V *versus* ENH). Un tel accumulateur sera appelé plus simplement « accumulateur Na-ion » dans ce qui suit.

Comme précédemment indiqué, cet électrolyte conducteur d'ions est, de préférence, liquide et comprend donc un sel de sodium en solution dans un solvant organique.

Ce sel de sodium peut notamment être choisi dans le groupe constitué par l'hexafluorophosphate de sodium (NaPFe), le perchlorate de sodium (NaClO₄), le tétrafluoroborate de sodium (NaBF₄), l'hexafluoroarsénate de sodium (NaAsF₆), le trifluorométhanesulfonate de sodium (NaCF₃SO₃), le bis(trifluorométhylsulfonyl)imide de sodium (NaN(CF₃SO₂)₂), le bis(perfluoroéthylsulfonyl)imide de sodium (NaN(C₂F₅SO₂)₂) et les mélanges de ceux-ci, préférence étant donnée à l'hexafluorophosphate de sodium.

Quant au solvant organique, il peut notamment être choisi parmi les carbonates tels que le carbonate d'éthylène (ou EC), le carbonate de propylène (ou PC), le carbonate de diméthyle (ou DMC), le carbonate de diéthyle (ou DEC) ou le carbonate de méthyléthyle (MEC), les éthers tels que le diméthoxyéthane, le dioxolane, le dioxane ou le tétraéthylène glycol diméthyléther (ou TEGDME), les phtalates d'alkyles tels que le phtalate de diméthyle (DMP) ou le phtalate de diéthyle (DEP), les nitriles tels que l'acétonitrile (AN) ou le glutaronitrile, le diméthylformamide (ou DMF), le sulfite de glycol, la γ-butyrolactone et les mélanges de ceux-ci, préférence étant donnée aux carbonates.

Lorsque l'électrolyte conducteur d'ions comprend des ions sodium (et ce, qu'il soit sous forme liquide ou autre), alors l'électrode positive des cellules électrochimiques a pour matériau actif, un matériau qui comprend du sodium.

Ce matériau actif peut notamment être choisi parmi les oxydes de sodium et de métaux de transition, les phosphates de sodium et de métaux de transition et les fluorophosphates de sodium et de métaux de transition.

À titre d'exemples d'oxydes de sodium et de métaux de transition, on peut notamment citer les oxydes lamellaires connus sous la formule NaₓMO₂ dans laquelle 0 <x ≤ 1 et M représente un métal de transition ou une combinaison de plusieurs métaux de transition choisis parmi le manganèse, le cobalt, le fer, le nickel, le chrome, le vanadium, le titane, le cuivre, le zinc et le scandium, tels que l'oxyde de sodium-cobalt NaCoO₂ et l'oxyde de sodium-cobalt-fer NaFe_{0,5}CO_{0,5}O₂.

À titre d'exemples de phosphates de sodium et de métaux de transition, on peut notamment citer :
- les phosphates de type NASICON (de « **NA**trium **S**uper **I**on **CON**ductor ») connus sous la formule Na₃M₂(PO₄)₃ dans laquelle M représente un métal de transition ou une combinaison de plusieurs métaux de transition choisis parmi le manganèse, le cobalt, le fer, le nickel, le chrome, le vanadium, le titane, le cuivre, le zinc et le scandium, tels que le phosphate de sodium-chrome Na₃Cr₂(PO₄)₃ et le phosphate de sodium-fer Na₃Fe₂(PO₄)₃ ; et
- les phosphates de type olivines connus sous la formule NaₓMPO₄ dans laquelle 0<x≤1 et M représente un métal de transition ou une combinaison de plusieurs métaux de transition choisis parmi le manganèse, le cobalt, le fer, le nickel, le chrome, le vanadium, le titane, le cuivre, le zinc et le scandium, tel que le phosphate de sodium-fer NaFePO₄.

À titre d'exemples de fluorophosphates de sodium et de métaux de transition, on peut citer les fluorophosphates connus sous la formule Na_{w}Mₓ(PO₄)_{y}F_{z} dans laquelle 0<w≤5, 0,5≤x≤3, 0,5≤y≤3, z = 1, 2 ou 3 et M représente un métal de transition ou une combinaison de plusieurs métaux de transition choisis parmi le manganèse, le cobalt, le fer, le nickel, le chrome, le vanadium, le titane, le cuivre, le zinc et le scandium, tels que les fluorophosphates de sodium-vanadium NaV(PO₄)F et Na₃V₂(PO₄)₂F₃.

De préférence, le matériau actif d'électrode positive est le fluorophosphate de sodium-vanadium Na₃V₂(PO₄)₂F₃.

Conformément à l'invention, l'électrode positive des cellules électrochimiques peut être constituée d'un matériau qui comprend, outre le matériau actif d'électrode positive, un polymère ou copolymère servant de liant, tel qu'un polymère fluoré du type PVdF, un copolymère fluoré du type PVdF-HFP ou un mélange de ceux-ci, et éventuellement un additif conducteur électronique tel que des particules de noir de carbone, des fibres de carbone ou un mélange de celles-ci.

L'électrode négative des cellules électrochimiques a, elle, avantageusement pour matériau actif, un matériau qui comprend un carbone non-graphitique (car l'ion sodium ne s'intercale pas dans le graphite) ou un alliage d'étain.

À titre d'exemples de carbones non graphitiques susceptibles d'être utilisé, on peut citer le graphène, les carbones dits « doux » (ou « soft carbons » en anglais), les carbones dits « durs » (ou « hard carbons » en anglais), les nanotubes de carbone (ou NTC) et les carbones non graphitiques synthétisés par réplique négative du type de celui qui est décrit par S. Wenzel et al. dans Energy Environ. Sci. 2011, 4, 3342-3345.

De préférence, le matériau actif d'électrode négative est un carbone dur.

Là également, l'électrode négative des cellules électrochimiques peut être constituée d'un matériau qui comprend, outre le matériau actif d'électrode négative, un polymère ou copolymère servant de liant, tel qu'un polymère fluoré du type PVdF, un copolymère fluoré du type PVdF-HFP, une carboxyméthylcellulose, un latex de styrène-butadiène ou de nitrile-butadiène, ou un mélange de ceux-ci, et éventuellement un additif conducteur électronique tel que des particules de noir de carbone, des fibres de carbone ou un mélange de celles-ci.

Conformément à l'invention, chaque cellule électrochimique présente avantageusement une tension nominale au moins égale à 3,6 V et, mieux encore, au moins égale à 3,65 V.

Comme précédemment indiqué, l'invention ne se limite pas à un accumulateur Na-ion mais englobe également des accumulateurs dont l'électrolyte conducteur d'ions comprend des ions potassium (E°(K⁺/K)=-2,92V *versus* ENH), calcium (E°(Ca²⁺/Ca)= -2,84 V *versus* ENH) ou magnésium (E°(Mg²⁺/Mg)= -2,37 V *versus* ENH) qui permettent aussi d'obtenir des tensions élevées tout en utilisant des collecteurs de courant en aluminium.

Ainsi, l'accumulateur électrochimique selon l'invention peut, par exemple, être un accumulateur bipolaire K-ion avec des cellules électrochimiques dont l'électrode positive est à base d'oxyde de potassium-manganèse KMnO₂ tandis que l'électrode négative est à base de carbone dur, ou bien un accumulateur bipolaire Ca-ion avec des cellules électrochimiques dont l'électrode positive est à base d'oxyde de calcium-cobalt tel que CaCo₂O₄ dont le potentiel moyen à environ 3,7 V *versus* Li⁺/Li (cf. M. Cabello et al., Electrochemistry Communications 2016, 67, 59-64) ou d'un analogue du bleu de Prusse tel que K*ₓ*NiFe(CN)₆ dans lequel le calcium s'insère à un potentiel d'environ 3,8 V *versus* Li⁺/Li (cf. T. Tojo et al, Electrochimica Acta 2016, 207, 22-27) tandis que l'électrode négative est à base de calcium métallique (cf. Ponrouch et al. Nature Materials 2016, 15, 169-172).

Pour les tensions de sortie classiquement recherchées dans le domaine des véhicules microhybrides, c'est-à-dire allant de 12 V à 100 V, le nombre de cellules électrochimiques susceptibles d'être présentes dans l'empilement disposé entre les deux collecteurs de courant terminaux sera donc typiquement compris entre 3 et 28.

L'accumulateur électrochimique selon l'invention présente de nombreux avantages. En effet, outre de présenter une forte densité de puissance comme cela sera démontré ci-après, il permet d'atteindre la tension de sortie qui est recherchée pour une application particulière avec un nombre moindre de cellules électrochimiques que celui que doit comprendre un accumulateur à architecture bipolaire Li-ion dont les cellules électrochimiques présentent une tension nominale plus faible pour atteindre cette même tension de sortie, tout en conservant un collecteur de courant unique en aluminium ou alliage d'aluminium, léger et peu coûteux.

Ainsi, par exemple, il est possible d'atteindre avec un accumulateur électrochimique selon l'invention à 12 cellules électrochimiques la tension de sortie de 48 V - qui est celle recherchée pour une application dans les véhicules hybrides - alors que 19 cellules électrochimiques sont nécessaires pour atteindre cette tension de sortie avec un accumulateur Li-ion bipolaire utilisant l'oxyde de manganèse lithié de structure spinelle LiMn₂O₄ (ou LMO) comme matériau d'électrode positive et le LTO comme matériau d'électrode négative, qui est, parmi les couples électrochimiques commerciaux susceptibles d'être utilisés dans des accumulateurs Li-ion bipolaires tout en conservant des collecteurs de courant bipolaires en aluminium, celui qui a la tension nominale la plus élevée. En effet, avec une tension nominale plus élevée, le lithium s'insérerait dans les collecteurs d'aluminium et les dégraderait.

L'accumulateur électrochimique selon l'invention permet ainsi de gagner en dimensions, en masse, en simplification des processus de fabrication et en coûts liés à cette fabrication.

Dans un mode de réalisation particulièrement préféré, l'accumulateur électrochimique selon l'invention comprend 12 cellules électrochimiques et présente une tension de sortie supérieure à 48 V à l'état chargé.

D'autres avantages et caractéristiques de l'invention ressortiront du complément de la description détaillée qui suit, qui est donnée à titre d'illustration de l'invention et ne constitue en aucune façon une limitation de cet objet.

### BRÈVE DESCRIPTION DES FIGURES

La figure 1, déjà commentée, représente schématiquement, vue en coupe longitudinale, un exemple typique de réalisation d'un accumulateur Li-ion bipolaire.
La figure 2 représente l'évolution des valeurs de puissance spécifique, notée P et exprimée en W/kg en fonction du nombre de cellules électrochimiques, noté N, telles qu'attendues pour un assemblage en série d'accumulateurs Na-ion monopolaires (tracé 1) et pour un accumulateur Na-ion bipolaire selon l'invention comprenant des cellules électrochimiques structurellement identiques à celles des accumulateurs Na-ion monopolaires (tracé 2).

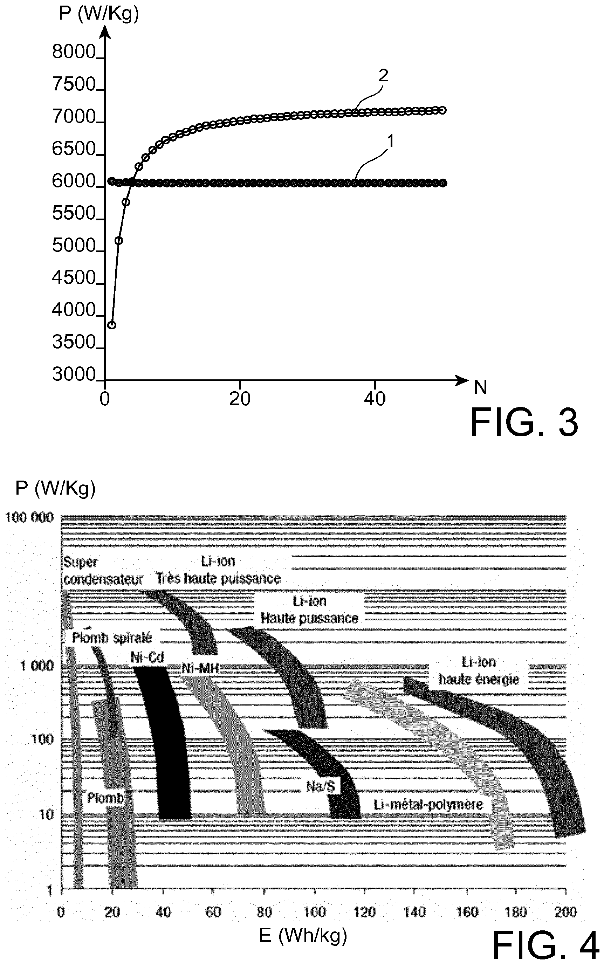

La figure 3 représente, à titre de comparaison, l'évolution des valeurs de puissance spécifique, notée P et exprimée en W/kg en fonction du nombre de cellules électrochimiques, noté N, telles qu'attendues pour un assemblage en série d'accumulateurs Li-ion monopolaires (tracé 1) et pour un accumulateur Li-ion bipolaire comprenant des cellules électrochimiques structurellement identiques à celles des accumulateurs Li-ion monopolaires (tracé 2).
La figure 4 représente le diagramme de Ragone montrant les performances respectives des différents types d'accumulateurs élémentaires (Li-ion, Li-métal-polymère, Na/NiCl₂, Ni-MH, Ni-Cd, plomb-acide, super-condensateurs) en situant sur une échelle semi-logarithmique la puissance spécifique, notée P et exprimée en W/kg, de ces accumulateurs en fonction de leur énergie spécifique, notée E et exprimée en Wh/kg.

### EXPOSÉ DÉTAILLÉ D'UN MODE DE RÉALISATION PARTICULIER

On fabrique un accumulateur Na-ion monopolaire comprenant deux collecteurs de courant terminaux se présentant sous la forme de feuillards d'aluminium de 20 µm d'épaisseur et entre lesquels sont disposés :
- une électrode positive, de 29 µm d'épaisseur par face et comprenant 90% en masse de Na₃V₂(PO₄)₂F₃ (synthétisé selon la demande de brevet français 2 952 367), 5% en masse de noir de carbone Super C65 (Imerys) et 5% en masse de liant PVDF (Solvay) ;
- un séparateur en polyoléfine (Celgard™ C480), de 21 µm d'épaisseur et à 50% de porosité ;
- une solution électrolytique comprenant 1 mol/L de NaPF₆ dans un mélange de carbonate d'éthylène et de carbonate de diméthyle (50:50, v/v) ;
- une électrode négative, de 29 µm d'épaisseur par face et comprenant 92% en masse de carbone dur (Kureha), 3% en masse de noir de carbone Super C65 (Imerys) et 5% en masse de liant PVDF (Solvay).

Les électrode positive et négative sont réalisées de manière conventionnelle, c'est-à-dire par : (1) mélange homogène de leurs constituants, dispersé dans un solvant organique (*N*-méthylpyrrolidone), (2) enduction de l'une des faces de l'un des collecteurs de courant par ce mélange au moyen d'une racle micrométrique, et (3) séchage des couches ainsi formées.

L'accumulateur est ensuite réalisé par spiralage des électrodes et du séparateur sur un mandrin plat de 28 mm de large, une connectique interne, collectrice de courant, en aluminium, de 15 mm de large sur 50 mm de long et 200 µm d'épaisseur étant soudée par ultrasons sur une rive de collecteur ménagée tout le long de l'électrode. Le bobinot ainsi assemblé est alors positionné dans un emballage de type sachet souple thermoscellé sur trois côtés. Il est ensuite rempli d'électrolyte dans une boite à gants sous atmosphère inerte, puis le dernier côté est thermoscellé sous pression réduite pour rendre l'accumulateur complètement hermétique.

L'accumulateur ainsi obtenu mesure 70 mm de long, 40 mm de large sur 5 mm d'épaisseur et pèse 26 g. Il présente :
- une tension maximale à l'état chargé de 4,1 V et une tension moyenne égale à 3,65 V ;
- une résistance interne, mesurée à 1 kHz, de 17 mOhm dont 2,7 mOhm correspondent à la résistance des collecteurs de courant et de la connectique interne ; et
- une capacité de charge électrique de 460 mAh.

Si on assemble en série plusieurs exemplaires de cet accumulateur *via* une connectique externe, la résistance complémentaire due à cette connectique externe est de 0,05 mOhm entre chaque accumulateur.

Si on réalise, conformément à l'invention, un accumulateur Na-ion bipolaire en intercalant - comme montré sur la figure 1 - entre les deux collecteurs de courant terminaux un empilement comprenant n cellules électrochimiques (avec n ≥ 2) comprenant chacune une électrode positive, une électrode négative et un séparateur imbibé de solution électrolytique identiques à ceux présents dans l'accumulateur Na-ion monopolaire et dans lequel deux cellules électrochimiques adjacentes sont séparées l'une de l'autre par un collecteur de courant bipolaire se présentant, comme les collecteurs de courant terminaux, sous la forme de feuillards d'aluminium de 40 µm d'épaisseur, on obtient un accumulateur dont chaque compartiment présente :
- une masse de 25,2 g ;
- une tension maximale à l'état chargé et une tension moyenne identiques à celles de l'accumulateur Na-ion monopolaire ;
- une capacité de charge électrique identique à celle de l'accumulateur Na-ion monopolaire, soit 460 mAh ; et
- une résistance interne de 13 mOhm.

Avec 12 cellules électrochimiques, qui est le nombre de cellules électrochimiques permettant d'atteindre la tension de sortie de 48 V qui est recherchée pour un usage dans un véhicule hybride (voir tableau I ci-après), l'accumulateur Na-ion bipolaire mesure 360 mm de longueur, 290 mm de largeur sur 1,5 mm d'épaisseur avec un périmètre de 1 cm pour assurer l'étanchéité des compartiments (au moyen d'un adhésif double face), chaque compartiment étant épais de 118 µm. Il comporte à ses extrémités 11 g de collecteurs de courant et d'emballage externe, la résistance due à ces collecteurs étant de 2.7 mOhm. Sa densité d'énergie est de 65 Wh/kg.

Le tableau I ci-après présente les valeurs de résistance interne (R), de tension, de puissance maximale (Pₘₐₓ, telles que déterminées par la formule précitée) et de puissance spécifique (P) attendues pour, d'une part, l'assemblage en série d'accumulateurs Na-ion monopolaires tels que décrits ci-avant (dit « assemblage monopolaire » dans ce tableau) et, d'autre part, l'accumulateur Na-ion bipolaire selon l'invention (dit « invention » dans ce tableau) en fonction du nombre de cellules électrochimiques présentées par cet assemblage et cet accumulateur.

Est également indiquée dans ce tableau la réduction de résistance interne, exprimée en pourcentages, que présente l'accumulateur Na-ion bipolaire selon l'invention par rapport à l'assemblage en série d'accumulateurs Na-ion monopolaires.

Par ailleurs, la figure 2 représente l'évolution des valeurs de puissance spécifique, notée P et exprimée en W/kg, telles que présentées dans le tableau I en fonction du nombre de cellules électrochimiques, noté N, le tracé 1 correspondant à l'assemblage en série d'accumulateurs Na-ion monopolaires et le tracé 2 correspondant à l'accumulateur Na-ion bipolaire selon l'invention.

Comme le montrent le tableau I et la figure 2, à partir de trois cellules électrochimiques, la puissance spécifique de l'accumulateur Na-ion bipolaire est déjà plus élevée que celle de l'assemblage en série d'accumulateurs Na-ion monopolaires et l'écart existant entre les puissances spécifiques des deux types d'assemblages ne cesse de croître avec le nombre de cellules électrochimiques, cet écart étant de plus de 20% à partir de 15 cellules et de presque 23% pour 28 cellules, la puissance spécifique de l'accumulateur Na-ion bipolaire approchant alors les 12 000 W/kg.

Un accumulateur Na-ion bipolaire selon l'invention à 12 étages (49,3 V) présente une puissance exceptionnelle, supérieure à toutes celles des accumulateurs élémentaires décrits dans l'état de l'art (voir pour comparaison, le diagramme de Ragone illustré sur la figure 4) puisque sa puissance spécifique est de 11 320 W/kg pour une énergie spécifique de 65 Wh/kg.

**Tableau I**

| **Nombre de cellules en série** | **Résistance interne (R)** (mOhm) | | **Réduction de R** (%) | **Tension** (V) | **Puissance maximale (Pₘₐₓ)** (W) | | **Puissance spécifique (P)** (W/kg) | |
|---|---|---|---|---|---|---|---|---|
| | Assemblage monopolaire | **Invention** | **Invention** | **Invention** | Assemblage monopolaire | **Invention** | Assemblage monopolaire | **Invention** |
| **2** | 34 | 31 | 9,0 | 8,2 | 495 | 544 | 9517 | 8 853 |
| **3** | 51 | 45 | 11,9 | 12,3 | 742 | 843 | 9 512 | 9 729 |
| **4** | 68 | 59 | 13,4 | 16,4 | 989 | 1 142 | 9 510 | 10 219 |
| **5** | 85 | 73 | 14,3 | 20,5 | 1236 | 1443 | 9 509 | 10 531 |
| **6** | 102 | 87 | 14,9 | 24,6 | 1483 | 1743 | 9 508 | 10 747 |
| **7** | 119 | 101 | 15,3 | 28,7 | 1730 | 2 044 | 9 507 | 10 906 |
| **8** | 136 | 115 | 15,7 | 32,8 | 1977 | 2 344 | 9 507 | 11 028 |
| **9** | 153 | 129 | 15,9 | 36,9 | 2 224 | 2 645 | 9 506 | 11124 |
| **10** | 170 | 143 | 16,1 | 41,1 | 2 472 | 2 946 | 9 506 | 11 201 |
| **11** | 188 | 157 | 16,3 | 45,2 | 2719 | 3 247 | 9 506 | 11 266 |
| **12** | 205 | 171 | 16,4 | 49,3 | 2 966 | 3 548 | 9 505 | 11 320 |
| **13** | 222 | 185 | 16,5 | 53,4 | 3 213 | 3 848 | 9 505 | 11 366 |
| **14** | 239 | 199 | 16,6 | 57,5 | 3 460 | 4149 | 9 505 | 11405 |
| **15** | 256 | 213 | 16,7 | 61,6 | 3 707 | 4 450 | 9 505 | 11440 |

**Tableau I (suite)**

| **Nombre de cellules en série** | **Résistance interne (R)** (mOhm) | | **Réduction de R** (%) | **Tension** (V) | **Puissance maximale (Pₘₐₓ)** (W) | | **Puissance spécifique (P)** (W/kg) | |
|---|---|---|---|---|---|---|---|---|
| | Assemblage monopolaire | **Invention** | **Invention** | **Invention** | Assemblage monopolaire | **Invention** | Assemblage monopolaire | **Invention** |
| **16** | 273 | 227 | 16,8 | 65,7 | 3 954 | 4 751 | 9 505 | 11 470 |
| **17** | 290 | 241 | 16,8 | 69,8 | 4 201 | 5 052 | 9 505 | 11 497 |
| **18** | 307 | 255 | 16,9 | 73,9 | 4 448 | 5 353 | 9 505 | 11 521 |
| **19** | 324 | 269 | 16,9 | 78.0 | 4 695 | 5 654 | 9 505 | 11 543 |
| **20** | 341 | 283 | 17,0 | 82,1 | 4 942 | 5 954 | 9 505 | 11 562 |
| **21** | 358 | 297 | 17,0 | 86,2 | 5 189 | 6 255 | 9 504 | 11 580 |
| **22** | 375 | 311 | 17,1 | 90,3 | 5 437 | 6 556 | 9 504 | 11 596 |
| **23** | 392 | 325 | 17,1 | 94,4 | 5 684 | 6 857 | 9 504 | 11 610 |
| **24** | 409 | 339 | 17,1 | 98,5 | 5 931 | 7 158 | 9 504 | 11 624 |
| **25** | 426 | 353 | 17,2 | 102,6 | 6 178 | 7 459 | 9 504 | 11 636 |
| **26** | 443 | 367 | 17,2 | 106,7 | 6 425 | 7 760 | 9 504 | 11 648 |
| **27** | 460 | 381 | 17,2 | 110,8 | 6 672 | 8 061 | 9 504 | 11 658 |
| **28** | 477 | 395 | 17,3 | 114,9 | 6 919 | 8 362 | 9 504 | 11 668 |

### Exemple comparatif :

À titre de comparaison, on fabrique un accumulateur Li-ion monopolaire de même format (70 mm x 40 mm x 5 mm) que l'accumulateur Na-ion monopolaire ci-avant en utilisant le couple d'électrodes permettant d'obtenir, pour un accumulateur Li-ion, la plus haute tension possible avec des collecteurs de courant en aluminium, à savoir une électrode positive à base de LMO (potentiel moyen de 4,05 V par rapport au couple Li⁺/Li), une électrode négative à base de LTO (potentiel moyen de 1,55 V par rapport au couple Li⁺/Li) et de l'hexafluorophosphate de lithium LiPF₆ (1 mol/L) dans un mélange EC/DMC (50:50, v/v) comme solution électrolytique.

La formulation de l'électrode positive est identique à celle de l'électrode positive utilisée ci-avant à ceci près que Na₃V₂(PO₄)₂F₃ est remplacé par du LMO, tandis que la formulation de l'électrode négative est la suivante : 90% en masse de LTO + 5% en masse de noir de carbone Super C65 (Imerys) + 5% en masse de liant PVDF (Solvay).

Cet accumulateur est muni des mêmes collecteurs de courant terminaux (feuillards d'aluminium de 20 µm d'épaisseur) et de la même connectique que l'accumulateur Na-ion monopolaire décrit ci-avant.

On obtient ainsi un accumulateur qui pèse 28,6 g et qui présente une tension maximale à l'état chargé de 2,55 V, une tension moyenne de 2,5 V, une capacité de charge électrique de 580 mAh, une densité d'énergie de 50 Wh/kg et une résistance interne, mesurée à 1 kHz, de 9mOhm dont 2,7 mOhm correspondent à la résistance des collecteurs de courant et de la connectique interne.

Si, comme précédemment, on réalise un accumulateur Li-ion bipolaire en intercalant entre les deux collecteurs de courant terminaux un empilement comprenant n cellules électrochimiques (avec n ≥ 2) identiques à celle de l'accumulateur Li-ion monopolaire ainsi fabriqué et dans lequel deux cellules électrochimiques adjacentes sont séparées l'une de l'autre par un collecteur de courant bipolaire se présentant, comme les collecteurs de courant terminaux, sous la forme de feuillards d'aluminium de 20 µm d'épaisseur, on obtient un accumulateur dont chaque compartiment présente :
- une masse de 34 g ;
- une tension et une capacité de charge électrique identiques à celles de l'accumulateur Li-ion monopolaire ; et
- une résistance interne de 6,3 mOhm.

Cet accumulateur comporte à ses extrémités 11 g de collecteurs de courant et d'emballage externe, la résistance due à ces collecteurs étant de 2,7 mOhm.

La figure 3 représente l'évolution des valeurs de puissance spécifique, notée P et exprimée en W/kg, telles qu'attendues pour, d'une part, un assemblage en série d'accumulateurs Li-ion monopolaires (tracé 1) et, d'autre part, l'accumulateur Li-ion bipolaire (tracé 2) en fonction du nombre de cellules électrochimiques, noté N, présentées par cet assemblage et cet accumulateur.

Comme le montre cette figure, l'architecture bipolaire se traduit, là également, par un gain de puissance. Toutefois, ce gain de puissance est beaucoup moins important que celui obtenu dans le cas d'un accumulateur Na-ion bipolaire selon l'invention puisqu'il n'est que de 17% pour 28 éléments en série. De plus, la puissance spécifique de l'accumulateur Li-ion bipolaire ne dépasse pas les 7 150 W/kg.

### RÉFÉRENCES CITÉES

**[1]** Brevet US 6,664,006
**[2]** Brevet FR 2 832 859
**[3]** S. Wenzel et al., Energy Environ. Sci. 2011, 4, 3342-3345
**[4]** M. Cabello et al., Electrochemistry Communications 2016, 67, 59-64
**[5]** T. Tojo et al, Electrochimica Acta 2016, 207, 22-27
**[6]** Ponrouch et al. Nature Materials 2016, 15, 169-172

## Revendications

1. Accumulateur électrochimique à architecture bipolaire, comprenant un premier et un deuxième collecteur de courant entre lesquels est disposé un empilement d'au moins une première et une deuxième cellule électrochimique dans lequel :
- chacune des première et deuxième cellules électrochimiques comprend une électrode positive, une électrode négative et un électrolyte conducteur d'ions ;
- les première et deuxièmes cellules électrochimiques sont séparées l'une de l'autre par un troisième collecteur de courant qui supporte sur une première face une électrode de la première cellule électrochimique et sur une deuxième face opposée à la première face une électrode de signe opposé de la deuxième cellule électrochimique ;
- le troisième collecteur de courant est en aluminium ou en un alliage d'aluminium ;
et qui est **caractérisé en ce que** l'électrolyte conducteur d'ions comprend des ions choisis parmi les ions calcium et magnésium.

2. Accumulateur électrochimique à architecture bipolaire, comprenant un premier et un deuxième collecteur de courant entre lesquels est disposé un empilement d'au moins une première et une deuxième cellule électrochimique dans lequel :
- chacune des première et deuxième cellules électrochimiques comprend une électrode positive, une électrode négative et un électrolyte conducteur d'ions ;
- les première et deuxièmes cellules électrochimiques sont séparées l'une de l'autre par un troisième collecteur de courant qui supporte sur une première face une électrode de la première cellule électrochimique et sur une deuxième face opposée à la première face une électrode de signe opposé de la deuxième cellule électrochimique ;
- le troisième collecteur de courant est en aluminium ou en un alliage d'aluminium ;
et qui est **caractérisé en ce que** l'électrolyte conducteur d'ions comprend des ions choisis parmi les ions sodium et potassium.

3. Accumulateur selon la revendication 1 ou la revendication 2, **caractérisé en ce que** l'électrolyte conducteur d'ions est un électrolyte liquide.

4. Accumulateur selon la revendication 2 ou la revendication 3, **caractérisé en ce que** l'électrolyte conducteur d'ions comprend des ions sodium.

5. Accumulateur selon la revendication 4, **caractérisé en ce que** l'électrolyte conducteur d'ions comprend un sel de sodium en solution dans un solvant organique.

6. Accumulateur selon la revendication 5, **caractérisé en ce que** le sel de sodium est choisi dans le groupe constitué par l'hexafluorophosphate de sodium (NaPF₆), le perchlorate de sodium (NaClO₄), le tétrafluoroborate de sodium (NaBF₄), l'hexafluoroarsénate de sodium (NaAsF₆), le trifluorométhanesulfonate de sodium (NaCF₃SO₃), le bis(trifluorométhylsulfonyl)imide de sodium (NaN(CF₃SO₂)2), le bis(perfluoroéthylsulfonyl)imide de sodium (NaN(C₂F₅SO₂)₂ et les mélanges de ceux-ci.

7. Accumulateur selon la revendication 5 ou la revendication 6, **caractérisé en ce que** le solvant organique est choisi dans le groupe constitué par les carbonates, les éthers, les phtalates d'alkyles, les nitriles, le diméthylformamide, le sulfite de glycol, la γ-butyrolactone et les mélanges de ceux-ci.

8. Accumulateur selon l'une quelconque des revendications 4 à 7, **caractérisé en ce que** l'électrode positive des cellules électrochimiques comprend un matériau actif qui comprend du sodium.

9. Accumulateur selon la revendication 8, **caractérisé en ce que** le matériau actif est choisi parmi les oxydes de sodium et de métaux de transition, les phosphates de sodium et de métaux de transition et les fluorophosphates de sodium et de métaux de transition.

10. Accumulateur selon l'une quelconque des revendications 4 à 9, **caractérisé en ce que** l'électrode négative des cellules électrochimiques comprend un matériau actif qui comprend un carbone non graphitique ou un alliage d'étain.

11. Accumulateur selon l'une quelconque des revendications 1 à 10, **caractérisé en ce que** les premier, deuxième et troisième collecteurs de courant sont en aluminium ou en un alliage d'aluminium.

12. Accumulateur selon la revendication 11, **caractérisé en ce que** les premier, deuxième et troisième collecteurs de courant sont en aluminium.

13. Accumulateur selon l'une quelconque des revendications 1 à 12, **caractérisé en ce que** chacune des première et deuxième cellules électrochimiques présente une tension nominale supérieure à 3,6 volts.

14. Accumulateur selon l'une quelconque des revendications 1 à 13, **caractérisé en ce qu'**il comprend 12 cellules électrochimiques et présente une tension de sortie supérieure à 48 V à l'état chargé.
